# EUROPEAN PATENT APPLICATION

(11) **EP 2 267 611 A2**
(43) Date of publication of application: **29.12.2010**
(21) Application number: 10251123.5
(22) Date of filing: 22.06.2010
(51) Int. Cl.: G06F 17/18, G01S 17/06

(54) **Amplitude computing apparatus and method**

(30) Priority: 23.06.2009 JP 2009148885
(71) Applicant: Yamatake Corporation, Tokyo 100-6419 (JP)
(72) Inventor: Ueno, Tatsuya, Tokyo 100-6419 (JP)
(74) Representative: Tomlinson, Kerry John

(57) **Abstract**

An apparatus for determining the amplitude of an input signal that changes sinusoidally comprises a representative value computing unit configured to compute a statistical representative value of a distribution of the input value that is sampled, wherein the statistical representative value includes at least one of a mean value, a median value, mode value, a standard deviation and quartiles; and an amplitude computing unit configured to compute the amplitude of the input signal based on the statistical representative value. In one embodiment the amplitude computing apparatus includes: a mean or median value computing unit (11) configured to compute a mean or median value of a distribution of an input signal that changes sinusoidally; a mode value computing unit (12) configured to compute a mode value of the distribution of the input signal; and an amplitude computing unit (13) configured to compute a difference between the mean or median value and the mode value as an amplitude of the input signal.

## Description

### BACKGROUND OF THE INVENTION

### Technical Field

The present invention relates to an amplitude computing apparatus, which computes the amplitude of a signal that changes sinusoidally, and an amplitude computing method.

### Related Art

A laser displacement measuring instrument can measure the position of a target that vibrates. Because the difference between the maximum value and the minimum value of the position of the target is the amplitude of the vibrational motion of the target, the amplitude can be derived from the maximum and minimum values derived for the target's position (*see* Application Specific Measurement Guides for a Laser Displacement Meter, Vol. 3: Measurement of Vibrations, p. 2, Keyence Corporation, <http://www.keyence.co.jp/req/h/ avhc3w5/show.jsp?done=/henni/index.jsp&motive=TOP>).

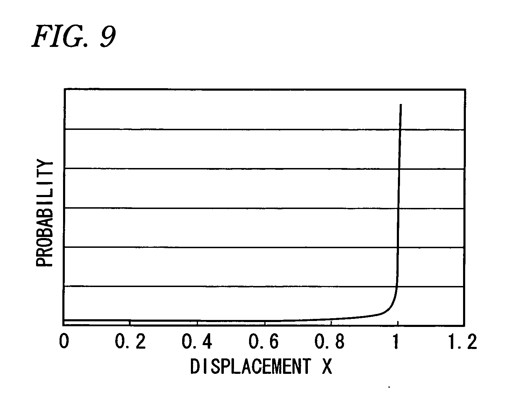

If the semi-amplitude from the center of the vibration of the target to the maximum value or the minimum value of the displacement is normalized, then the probability distribution function of a displacement ***X*** is given as 1/cos{asin(*X*)}, as shown in **FIG. 9****.** As a result, in the ideal state, if the positional data of the target is sampled at discrete times and the sample size is sufficiently large, then the amplitude data of the target can be correctly measured based on the maximum value and the minimum value of the target's position.

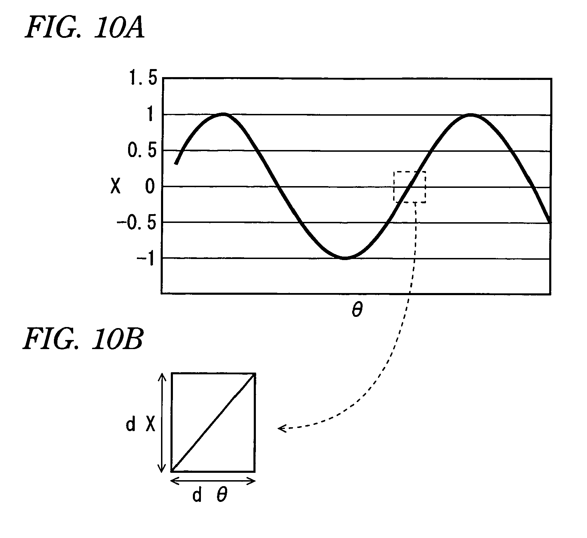

Here, the method of deriving the probability distribution function of the displacement ***X*** will be explained. **FIG. 10A** and **10B** are views for explaining the method of deriving the probability distribution function of the displacement ***X.*** If ***X*** takes on the values in the function sine wave sin(θ·*t*), then the probability is given as *X* = sin(θ), and therefore is proportionate to 1/cos(θ), which is the inverse of the slope of sin(θ). FIG **10B** shows part of the sine wave in **FIG. 10A****.** In **FIG. 10B****,** the time during which the displacement ***X*** is included in d*X* is dθ, and d*X*/dθ is cos(θ); therefore, the value of θ when sin(θ) is d*X* is given as dθ/d*X*, namely, 1/cos(θ). Furthermore, because sin(θ) = *X*, θ = asin(*X*). If we substitute θ = asin(*X*) in 1/cos(θ), then the probability density function when ***X*** takes on the values of the function sin(θ) is proportional to 1/cos{asin(*X*)}. The above is the method of deriving the probability distribution function of the displacement ***X***.

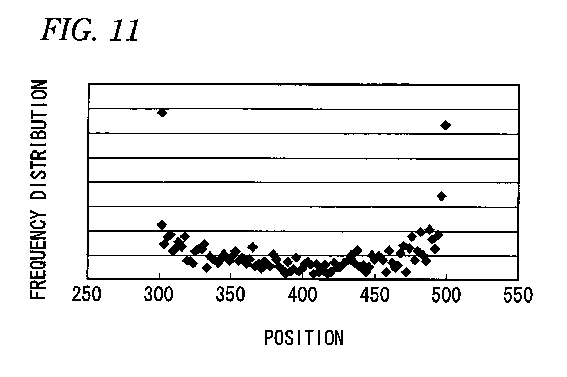

**FIG. 11** shows the frequency distribution when the mean position (i.e., the center) was 400, the amplitude was 200, and the positions of the target that vibrates were randomly generated; it is evident that the frequency distribution from the center 400 to the maximum value 500 coincides with the probability density function shown in **FIG. 9****.**

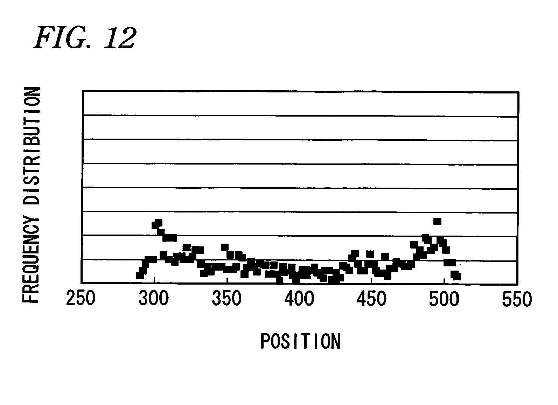

Incidentally, each target positional data value contains error, and the error distribution can be regarded as a normal distribution. Accordingly, the frequency distribution of the positions including error is shown in **FIG. 12****.** In the example shown in **FIG. 12****,** the error (i.e., standard deviation = 5) caused by noise is the difference between the position's maximum value 510 and original value 500 as well as the difference between the position's minimum value 290 and original value 300; therefore, the amplitude value 220 (i.e., the maximum value - the minimum value) is approximately 10% larger than the original value 200.

As described above, the conventional method of deriving the amplitude of a vibration using the maximum value and the minimum value of the position cannot eliminate the effects of noise, tends to make an overly high estimate of the amplitude, and cannot predict error, which are problems.

### SUMMARY OF THE INVENTION

It is an aim of the present invention to provide an amplitude computing apparatus, which can reduce the amplitude error, and an amplitude computing method.

According to one aspect of the invention, there is provided an apparatus for determining the amplitude of an input signal that changes sinusoidally, the apparatus comprising: a representative value computing unit configured to compute a statistical representative value of a distribution of the input value that is sampled, wherein the statistical representative value includes at least one of a mean value, a median value, mode value, a standard deviation and quartiles; and an amplitude computing unit configured to compute the amplitude of the input signal based on the statistical representative value.

According to one or more illustrative aspects of the present invention, there is provided an amplitude computing apparatus including: a mean or median value computing unit configured to compute a mean or median value of a distribution of an input signal that changes sinusoidally; a mode value computing unit configured to compute a mode value of the distribution of the input signal; and an amplitude computing unit configured to compute a difference between the mean or median value and the mode value as an amplitude of the input signal.

According to one or more illustrative aspects of the present invention, there is provided an amplitude computing apparatus including: a standard deviation computing unit configured to compute a standard deviation of a distribution of an input signal that changes sinusoidally; and an amplitude computing unit configured to compute a value of √2 times the standard deviation as an amplitude of the input signal.

According to one or more illustrative aspects of the present invention, there is provided an amplitude computing apparatus including: a quartile computing unit configured to compute quartiles of a distribution of an input signal that changes sinusoidally; and an amplitude computing unit configured to compute a value of √2 times a difference between either of a first quartile or a third quartile among the quartiles and a second quartile as an amplitude of the input signal.

According to one or more illustrative aspects of the present invention, there is provided an amplitude computing apparatus including: a quartile computing unit configured to compute quartiles of a distribution of an input signal that changes sinusoidally; a mean value computing unit configured to compute a mean value of the distribution of the input signal; and an amplitude computing unit configured to compute a value of √2 times a difference between either of a first quartile or a third quartile among the quartiles and the mean value as an amplitude of the input signal.

According to another aspect of the invention, there is provided a method of determining the amplitude of an input signal that changes sinusoidally, the method comprising: computing a statistical representative value of a distribution of the input value that is sampled, wherein the statistical representative value includes at least one of a mean value, a median value, mode value, a standard deviation and quartiles; and computing the amplitude of the input signal based on the statistical representative value.

According to one or more illustrative aspects of the present invention, there is provided an amplitude computing method including: computing a mean or median value of a distribution of an input signal that changes sinusoidally; computing a mode value of the distribution of the input signal; and computing a difference between either of the mean or median value and the mode value as an amplitude of the input signal.

According to one or more illustrative aspects of the present invention, there is provided an amplitude computing method including: computing a standard deviation of a distribution of an input signal that changes sinusoidally; and computing a value of √2 times the standard deviation as an amplitude of the input signal.

According to one or more illustrative aspects of the present invention, there is provided an amplitude computing method including: computing quartiles of a distribution of an input signal that changes sinusoidally; and computing a value of √2 times a difference between either of a first quartile or a third quartile among the quartiles and a second quartile as an amplitude of the input signal.

According to one or more illustrative aspects of the present invention, there is provided an amplitude computing method including: computing quartiles of a distribution of an input signal that changes sinusoidally; computing a mean value of the distribution of the input signal; and computing a value of √2 times a difference between either of a first quartile or a third quartile among the quartiles and the mean value as an amplitude of the input signal.

According to the present invention, computing the difference between the mean or median value and the mode value of the input signal as the amplitude makes it possible to reduce amplitude error more than in the conventional method wherein the amplitude is defined as the difference between the maximum value and the minimum value.

In addition, in the present invention, computing the value of √2 times the standard deviation of the distribution of the input signal as the amplitude makes it possible to reduce amplitude error more than in the conventional method, wherein the amplitude is defined as the difference between the maximum value and the minimum value.

In addition, in the present invention, computing quartiles of a distribution of an input signal and computing a value of √2 times the difference between a first quartile or a third quartile among the quartiles and a second quartile as the amplitude makes it possible to reduce amplitude error more than in the conventional method wherein the amplitude is defined as the difference between the maximum value and the minimum value.

In addition, in the present invention, computing quartiles and a mean value of a distribution of an input signal and computing a value of √2 times the difference between a first quartile or a third quartile among the quartiles and the mean value as an amplitude makes it possible to reduce amplitude error more than in the conventional method wherein the amplitude is defined as the difference between the maximum value and the minimum value.

### BRIEF DESCRIPTION OF THE DRAWINGS

**FIG. 1** is a block diagram that shows the configuration of an amplitude computing apparatus according to an embodiment of the present invention;
**FIG. 2** is a flow chart that shows the operation of the amplitude computing apparatus according to the embodiment of the present invention;
**FIG. 3** is a block diagram that shows the configuration of the amplitude computing apparatus according to another embodiment of the present invention;
**FIG. 4** is a flow chart that shows the operation of the amplitude computing apparatus according to the other embodiment of the present invention;
**FIG. 5** is a block diagram that shows the configuration of the amplitude computing apparatus according to a further embodiment of the present invention;
**FIG. 6** is a flow chart that shows the operation of the amplitude computing apparatus according to the further embodiment of the present invention;
**FIG. 7** is a block diagram that shows the configuration of the amplitude computing apparatus according to an embodiment of the present invention;
**FIG. 8** is a flow chart that shows the operation of the amplitude computing apparatus according to the embodiment of the present invention;
**FIG. 9** shows the probability distribution function of a displacement;
**FIG. 10** is for the purpose of explaining a method of deriving the probability distribution function of the displacement;
**FIG. 11** shows a frequency distribution when the positions of a target are randomly generated;
**FIG. 12** shows the frequency distribution of the positions including error.

### DETAILED DESCRIPTION OF EXEMPLARY EMBODIMENTS

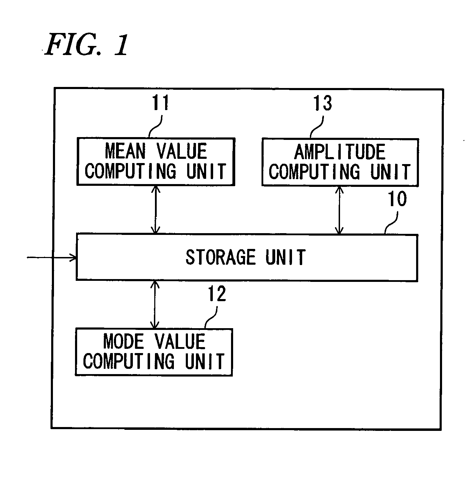

The following text explains the embodiments of the present invention, referencing the drawings. **FIG. 1** is a block diagram that shows the configuration of an amplitude computing apparatus according to an embodiment of the present invention.

The amplitude computing apparatus has a storage unit **10,** and a representative value computing unit in the form of a mean value computing unit **11** and a mode value computing unit 12, and an amplitude computing unit **13.**

If values are sampled along a sinusoidal track such that the sampling can be regarded as uniform, then the difference between the mean and the mode is the semi-amplitude, even if each individual value includes error. If the sampling interval is uniform and the number of observations included in the times that fall within the lowest common multiple of the sampling interval and the sinusoidal period is sufficiently large, then the sampling of the values along the sinusoidal track can be considered uniform. If the sampling interval is not uniform or if the number of observations included in the times that fall within the lowest common multiple of the sampling interval and the sinusoidal period is small, then the sampling of the values along the sinusoidal track cannot be considered uniform and, consequently, in such a case, the present embodiment is not effective.

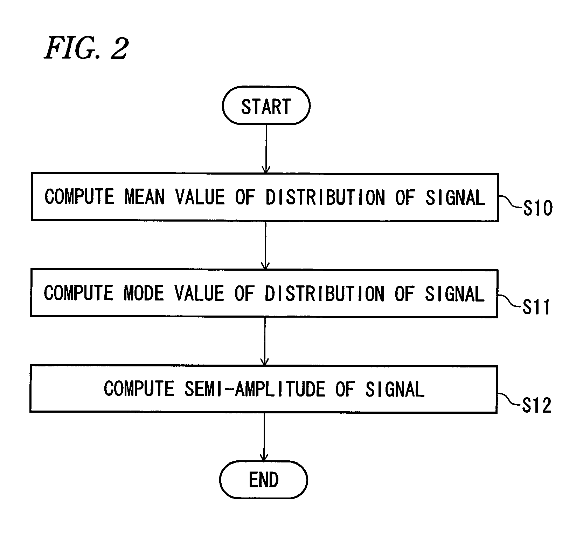

The operation of the present embodiment will be now described in details. **FIG. 2** is a flow chart that shows the operation of the amplitude computing apparatus according to the present embodiment. A positional data signal of, for example, an object that vibrates is input as a time series to the amplitude computing apparatus of the present embodiment. The positional data signal can be obtained by a laser displacement measuring instrument, as discussed above. At this time, the positional data signal is a discrete signal produced by sampling at fixed time intervals. The storage unit **10** stores the signal that is input.

The mean value computing unit **11** computes the mean value of the distribution of the signal stored in the storage unit **10** (i.e., step **S10** in **FIG. 2**). The mean value computed by the mean value computing unit **11** is stored in the storage unit **10.**

The mode value computing unit **12** computes the mode value of the distribution of the signal stored in the storage unit **10** (i.e., step **S11)**. The mode value computed by the mode value computing unit **12** is stored in the storage unit **10.** The mode value corresponds to the maximum value or the minimum value of the signal.

Lastly, the amplitude computing unit **13** computes the difference between the mean value and the mode value as the semi-amplitude of the signal (i.e., step **S12).** Furthermore, if (mean > mode), then the semi-amplitude should be defined as (mean - mode); furthermore, if (mode > mean), then the semi-amplitude should be defined as (mode - mean). It goes without saying that twice the value of the semi-amplitude is the amplitude (i.e., the peak-to-peak amplitude).

In the present embodiment as described above, computing the difference between the mean value and the mode value of the signal as the semi-amplitude makes it possible to reduce amplitude error more than in the conventional method wherein the amplitude is defined as the difference between the maximum value and the minimum value.

Furthermore, in the present embodiment, the semi-amplitude of the signal is defined as the difference between the mean and the mode of the signal, but the semi-amplitude of the signal may be defined as the difference between the distribution median and the mode of the signal. Namely, a median value computing unit may be used instead of the mean value computing unit **11,** and the amplitude computing unit **13** may compute the difference between the median value and the mode value as the semi-amplitude of the signal.

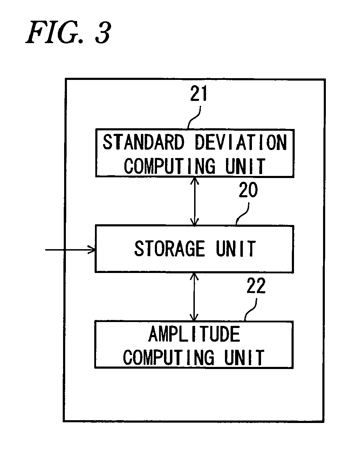

Next, another embodiment of the present invention will be now explained. **FIG. 3** is a block diagram that shows the configuration of the amplitude computing apparatus according to the other embodiment of the present invention.

The amplitude computing apparatus includes a storage unit **20,** a standard deviation computing unit **21,** and an amplitude computing unit **22.**

If values along a sinusoidal track are sampled such that the sampling can be regarded as uniform, then the standard deviation of a sine wave is given as 1/√2 (≈ 0.707) of the semi-amplitude and, consequently, if the standard deviation of the sampled values is calculated and multiplied by √2, then the result is the semi-amplitude.

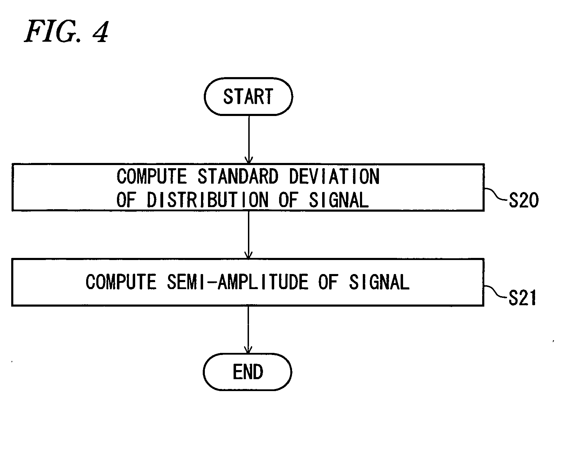

**FIG. 4** is a flow chart that shows the operation of the amplitude computing apparatus of the present embodiment. As in the previous embodiment, the storage unit **20** stores the positional data signal, which is input as a time series.

The standard deviation computing unit **21** computes the standard deviation of the distribution of the signal stored in the storage unit **20** (i.e., step **S20** in **FIG. 4****).** The standard deviation computed by the standard deviation computing unit **21** is stored in the storage unit **20.**

The amplitude computing unit **22** computes the value of √2 (≈ 1.414) times the standard deviation as the semi-amplitude of the signal (i.e., step **S21).**

In the present embodiment as described above, computing the value of √2 times the standard deviation of the distribution of the signal as the semi-amplitude makes it possible to reduce amplitude error more than in the conventional method, wherein the amplitude is defined as the difference between the maximum value and the minimum value.

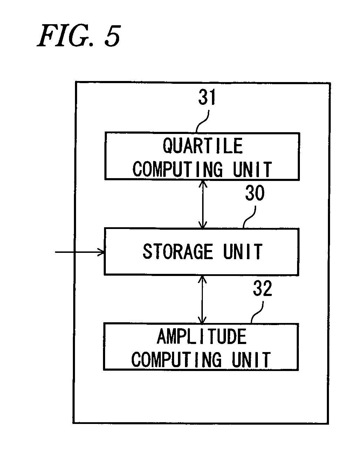

Next, a further embodiment of the present invention will be now explained. **FIG. 5** is a block diagram that shows the configuration of the amplitude computing apparatus according to this embodiment of the present invention.

The amplitude computing apparatus includes a storage unit **30,** a quartile computing unit **31,** and an amplitude computing unit **32.**

The basic principle of the present embodiment is the same as that of the above embodiment; however, instead of the reference being defined as the standard deviation, the reference is defined as a first quartile, which has less error. The difference between the first quartile and the mean is given as 1/√2 (≈ 0.707) times the semi-amplitude and, consequently, if the first quartile of the distribution of the sampled values is derived and multiplied by √2, then the result is the semi-amplitude.

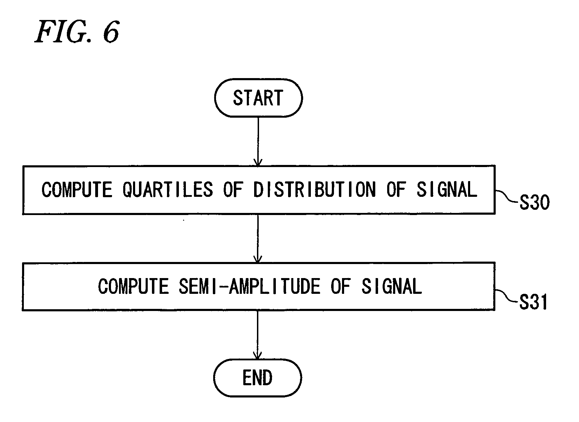

**FIG. 6** is a flow chart that shows the operation of the amplitude computing apparatus of the present embodiment. As in the above embodiment, the storage unit **30** stores the positional data signal, which is input as a time series.

The quartile computing unit **31** computes the quartiles of the distribution of the signal stored in the storage unit **30** (i.e., step **S30** in **FIG. 6****).**

The amplitude computing unit **32** computes the value of √2 (≈ 1.414) times the difference between the second quartile (i.e., the median) and either the first quartile or the third quartile of the computed quartiles as the semi-amplitude of the signal (i.e., step **S31).** For example, in the example shown in **FIG. 12****,** the first quartile is 330, the second quartile is 400, and the third quartile is 470.

The above embodiments require a sample of sufficient uniformity and size for the frequency distribution of the signal to be regarded as 1/cos{asin(*X*)} (wherein ***X*** is the displacement); in addition, because the frequency changes sharply in the vicinity of the maximum amplitude, error tends to be incorporated therein; however, the quartiles tend not to be affected by sample uniformity, outliers, and the like. As such, according to the present embodiment, amplitude error can be reduced even more than in the previous embodiments.

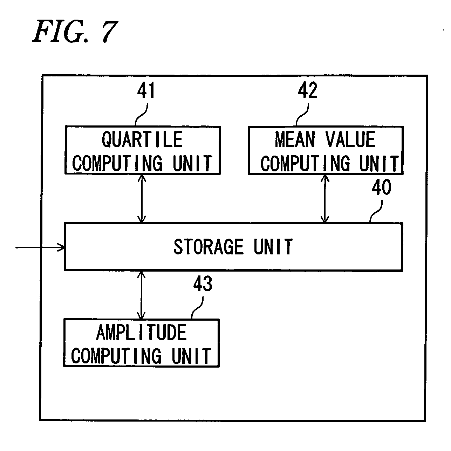

Next, an embodiment of the present invention will be now explained. **FIG. 7** is a block diagram that shows the configuration of the amplitude computing apparatus according to the embodiment of the present invention.

The amplitude computing apparatus includes a storage unit **40,** a quartile computing unit **41,** a mean value computing unit **42,** and an amplitude computing unit **43.**

The present embodiment uses the mean value instead of the second quartile (i.e., the median) used in the above embodiment.

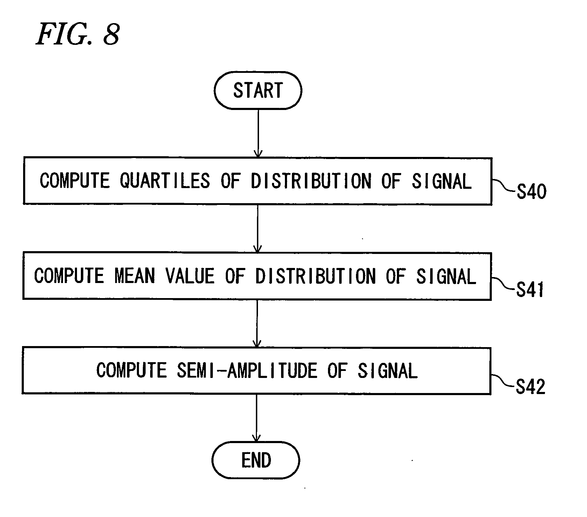

**FIG. 8** is a flow chart that shows the operation of the amplitude computing apparatus of the present embodiment. As in the embodiments, the storage unit **40** stores the positional data signal, which is input as a time series.

The quartile computing unit **41** computes the quartiles of the distribution of the signal stored in the storage unit **40** (i.e., step **S40** in **FIG. 8****).**

The mean value computing unit **42** computes the mean value of the distribution of the signal stored in the storage unit **40** (i.e., step **S41).** The mean computed by the mean value computing unit **42** is stored in the storage unit **40.**

The amplitude computing unit **43** computes the value of √2 times the difference between the mean and the first quartile or the third quartile among the computed quartiles as the semi-amplitude of the signal (i.e., step **S42).**

Furthermore, the amplitude computing apparatus in the above embodiments can be implemented by a program that controls: a computer, which has, for example, a CPU, a storage, and an interface; and hardware resources thereof. The program for controlling such a computer may be recorded on a storage medium, such as a flexible disk, a CD-ROM, a DVD-ROM, or a memory card. The CPU writes the program, which was read in, to the storage apparatus and, in accordance with the program, executes the processes explained in the above embodiments.

In addition, the embodiments explain an exemplary case wherein a signal that is input serves as the positional data signal of the object that vibrates, but the present invention is not limited thereto. For example, the present invention can be adapted to other cases as long as the signal that is input to the amplitude computing apparatus is a discrete signal obtained by sampling a sinusoidal signal.

The present invention can be adapted to a technology that computes the amplitude of a signal that changes sinusoidally.

The exemplary embodiments of the invention have been described in connection with the concept of "semi-amplitude", which generally indicates a difference between the center of the vibration and the maximum value (or the minimum value) of the displacement. However, instead of the concept of "semi-amplitude", the exemplary embodiments might be described in connection with the concept of "peak-to-peak amplitude", which generally indicates a difference between the maximum value of the displacement and the minimum value of the displacement. Accordingly, in the scope of claims, the concept of "amplitude" might include both "semi-amplitude" and "peak-to-peak amplitude".

Constituent components disclosed in the aforementioned embodiments may be combined suitably to form various modifications. For example, some of all constituent components disclosed in one of the embodiments may be removed or the constituent components disclosed in different embodiments may be appropriately combined.

## Claims

1. An apparatus for determining the amplitude of an input signal that changes sinusoidally, the apparatus comprising:
a representative value computing unit configured to compute a statistical representative value of a distribution of the input value that is sampled, wherein the statistical representative value includes at least one of a mean value, a median value, mode value, a standard deviation and quartiles; and
an amplitude computing unit configured to compute the amplitude of the input signal based on the statistical representative value.

2. An apparatus as claimed in claim 1, wherein the representative value computing unit is configured to compute a mean or median value of the distribution of the input signal and to compute a mode value of the distribution of the input signal; and
the amplitude computing unit is configured to compute a difference between the mean or median value and the mode value as an amplitude of the input signal.

3. An apparatus as claimed in claim 1, wherein the representative value computing unit is configured to compute a standard deviation of the distribution of the input signal; and
the amplitude computing unit is configured to compute a value of √2 times the standard deviation as an amplitude of the input signal.

4. An apparatus as claimed in claim 1, wherein the representative value computing unit is configured to compute quartiles of the distribution of the input signal; and
the amplitude computing unit is configured to compute a value of √2 times a difference between either of a first quartile or a third quartile among the quartiles and a second quartile as an amplitude of the input signal.

5. An apparatus as claimed in claim 1, wherein the representative value computing unit is configured to compute quartiles of the distribution of the input signal and a mean value of the distribution of the input signal; and
the amplitude computing unit is configured to compute a value of √2 times a difference between either of a first quartile or a third quartile among the quartiles and the mean value as an amplitude of the input signal.

6. A method of determining the amplitude of an input signal that changes sinusoidally, the method comprising:
computing a statistical representative value of a distribution of the input value that is sampled, wherein the statistical representative value includes at least one of a mean value, a median value, mode value, a standard deviation and quartiles; and
computing the amplitude of the input signal based on the statistical representative value.

7. A method as claimed in claim 6, comprising:
computing a mean or median value of the distribution of athe input signal;
computing a mode value of the distribution of the input signal; and
computing a difference between either of the mean or median value and the mode value as an amplitude of the input signal.

8. A method as claimed in claim 6, comprising:
computing a standard deviation of the distribution of the input signal; and
computing a value of √2 times the standard deviation as an amplitude of the input signal.

9. A method as claimed in claim 6, comprising:
computing quartiles of the distribution of the input signal; and
computing a value of √2 times a difference between either of a first quartile or a third quartile among the quartiles and a second quartile as an amplitude of the input signal.

10. A method as claimed in claim 6, comprising:
computing quartiles of the distribution of the input signal;
computing a mean value of the distribution of the input signal; and
computing a value of √2 times a difference between either of a first quartile or a third quartile among the quartiles and the mean value as an amplitude of the input signal.
